# EUROPEAN PATENT SPECIFICATION

(11) **EP 3 437 953 B1**
(45) Date of publication and mention of the grant of the patent: **10.01.2024**
(21) Application number: 17774961.1
(22) Date of filing: 27.03.2017
(51) Int. Cl.: B61D 27/00, B60H 1/00, F24F 1/00

(54) **AIR CONDITIONER AND CLEANING METHOD**
KLIMAANLAGE UND REINIGUNGSVERFAHREN
CLIMATISEUR ET PROCÉDÉ DE NETTOYAGE

(30) Priority: 28.03.2016 JP 2016063409
(43) Date of publication of application: 06.02.2019
(73) Proprietor: Mitsubishi Electric Corporation, Chiyoda-ku Tokyo 100-8310 (JP)
(72) Inventor: SATO Keita, Tokyo 100-8310 (JP)
(74) Representative: Studio Torta S.p.A.
(86) International application number: PCT/JP2017/012432
(87) International publication number: WO 2017/170424

(56) References cited:
- JP-A- H11 216 073
- JP-A- 2003 166 799
- JP-A- 2005 180 735
- JP-A- 2007 050 501
- JP-A- 2007 223 450
- JP-A- 2007 223 450
- JP-A- 2007 303 694
- JP-A- 2013 199 197
- US-A1- 2009 071 182

## Description

### Technical Field

The present disclosure relates to an air conditioner.

### Background Art

An air conditioner for railway car use that air conditions a passenger compartment of the railway car has a casing in which is formed a ventilation port communicating with the passenger compartment of the railway car, and the casing houses a heat exchanger for heat exchange with air flowing through the ventilation port.

Dust carried by the flowing air attaches to the heat exchanger. Thus the heat exchanger requires periodic cleaning in order to maintain efficiency of the heat exchanger. The cleaning of the heat exchanger is performed after blocking the ventilation port. This is to prevent dust removed from the heat exchanger or wash water used in the cleaning from flowing into the passenger compartment through the ventilation port.

Patent Literature 1 discloses a configuration by which a plate-like ventilation port cover for blocking the ventilation port during cleaning of the heat exchanger is attached in a freely rotating manner to a side of the ventilation port within the casing, such that the ventilation port can be opened and closed by the plate-like ventilation port cover. Patent Literature 2 discloses an air conditioner configured to efficiently carry out work without trouble during cleaning work of a coil, comprising: a casing, a fan and the coil juxtaposed along an air duct in the casing; air passage port parts; an opening and closing port capable of freely opening and closing in at least one of a side portion or an upper portion of a part covering the coil of a casing circumferential wall; and a partition plate attachment and detachment part for freely attaching and detaching a partition plate partitioning the air duct in a neighborhood of an arrangement part of the coil during the cleaning work of the coil.

### Citation List

### Patent Literature

Patent Literaturel: Unexamined Japanese Patent Application Kokai Publication No. 2007-223450. Patent Literature2: Japanese Patent Application No. JP 2005 180735.

### Summary of Invention

### Technical Problem

The plate-like ventilation port cover remains within the casing even after cleaning of the heat exchanger. Although the ventilation port is opened after cleaning, the aforementioned plate-like ventilation port cover is bulky, and thus air flow within the casing is disturbed even when the ventilation port is in the opened state. This disturbance can cause a lowering of heat exchange efficiency of the heat exchanger.

An objective of the present disclosure is to provide an air conditioner and a cleaning method that, even when the ventilation port cover remains in the casing after cleaning of the heat exchanger, hardly disturb the air flow within the casing.

### Solution to Problem

The aforementioned objective is addressed by an air conditioner according to the annexed set of claims.

### Advantageous Effects of Invention

According to the aforementioned configuration, the ventilation port cover is detachably fixed to the casing in the first form in which the ventilation port cover covers the ventilation port from the interior of the casing, and thus the ventilation port cover can be removed from the casing after cleaning of the heat exchanger. Even assuming that the ventilation port cover remains within the casing, if the ventilation port cover is arranged within the casing in the second form, the ventilation port cover is folded compactly and thus hardly disturbs the airflow within the casing.

### Brief Description of Drawings

FIG. 1 is a top view of an air conditioner for railway car use according to Embodiment 1;
FIG. 2 is a conceptual drawing illustrating a state in which a return hole cover in a second form according to Embodiment 1 is housed within a casing;
FIG. 3A is a perspective view illustrating the return hole cover according to Embodiment 1 when flatly deployed;
FIG. 3B is a perspective view illustrating the return hole cover of a first form according to Embodiment 1;
FIG. 4 is a conceptual drawing illustrating a state in which the return hole cover according to Embodiment 1 is fixed within the casing in the first form;
FIG. 5 is a cross-sectional drawing illustrating a state in which the return hole cover according to Embodiment 1 is fixed within the casing in the first form;
FIG. 6A is a perspective view and a side view illustrating transition of the return hole cover according to Embodiment 1 into the second form;
FIG. 6B is a perspective view and a side view illustrating transition of the return hole cover according to Embodiment 1 into another second form;
FIG. 7A is a perspective view illustrating one expansion-contraction direction end portion of a return hole cover according to Embodiment 2;
FIG. 7B is a perspective view illustrating another expansion-contraction direction end portion of the return hole cover according to Embodiment 2;
FIG. 8 is a conceptual drawing illustrating a state in which the return hole cover in the second form according to Embodiment 2 is housed within the casing;
FIG. 9 is a conceptual drawing illustrating a state in which the return hole cover according to Embodiment 2 in the first form covers a return hole;
FIG. 10 is a cross-sectional drawing illustrating a state in which the return hole cover according to Embodiment 2 in the first form covers the return hole; and
FIG. 11 is a perspective view of a return hole cover according to Embodiment 3.

### Description of Embodiments

Air conditioners for railway car use according to embodiments of the present disclosure are described below with reference to drawings. In the drawings, components that are the same or equivalent are assigned the same reference signs.

### Embodiment 1

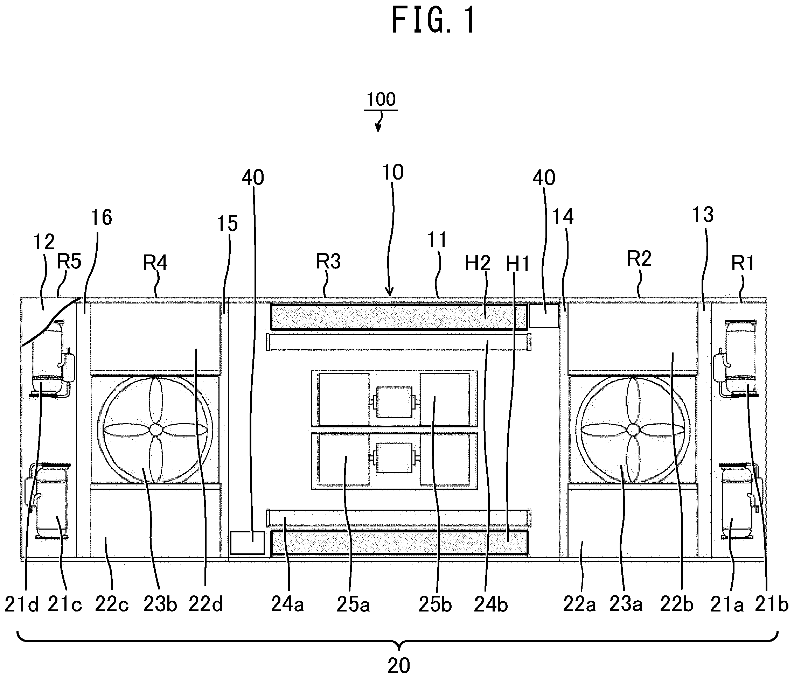

As illustrated in FIG. 1, an air conditioner 100 for railway car use according to the present embodiment has a configuration by which a heat pump 20 included in a refrigeration cycle is housed within a casing 10 serving as an outer shell.

The casing 10 includes a box-shaped base frame 11 having a bottom face, side faces, and an open top portion, a top face 12 covering the top portion opening of the base frame 11, and first-fourth partition plates 13-16 for partitioning an interior space surrounded by the base frame 11 and the top face 12. In order to show the interior of the casing 10, only a portion of the top face 12 is illustrated in FIG. 1.

The base frame 11 is mounted on a roof of the railway car and in top view has a rectangular shape extending longitudinally in the forward-backward direction of the railway car (right-left direction in FIG. 1). Due to the first-fourth partition planes 13-16, the interior of the casing 10 includes a first compressor chamber R1, a first outdoor unit chamber R2, an indoor unit chamber R3, a second outdoor unit chamber R4, and a second compressor chamber R5.

Return holes H1 and H2 serving as ventilation ports are formed in a bottom face of the indoor unit chamber R3. The return holes H1 and H2 communicate with the passenger compartment of the railway car as an air-conditioning target room to be air conditioned.

The heat pump 20 includes compressors 21a-21d for compression of a refrigerant, outdoor heat exchangers 22a-22d for heat exchange with the outside air, and indoor heat exchangers 24a and 24b for heat exchange with the air within the passenger compartment of the railway car. The heat pump 20 includes: an outdoor fan 23a for promoting the heat exchange of the outdoor heat exchangers 22a and 22b; an outdoor fan 23b for promoting the heat exchange of the outdoor heat exchangers 22c and 22d; an indoor fan 25a for intake of air of the passenger compartment of the railway car from the return hole H1, passing the intake air through the indoor heat exchanger 24a, and returning the air again to the passenger compartment; and an indoor fan 25b for intake of air of the passenger compartment of the railway car from the return hole H2, passing the intake air through the indoor heat exchanger 24b, and returning the air again to the passenger compartment.

The compressors 21a and the 21b are arranged in the first compressor chamber R1. The compressors 21c and the 21d are arranged in the second compressor chamber R5. The outdoor head exchangers 22a and 22b and the outdoor fan 23a are arranged in the first outdoor chamber R2. The outdoor heat exchangers 22c and 22d and the outdoor fan 23b are arranged in the second outdoor unit chamber R4.

The indoor heat exchangers 24a and 24b and the indoor fans 25a and 25b are arranged in the indoor unit chamber R3. Further, a return hole cover 40 serving as a ventilation port cover for covering the return holes H1 and H2 during cleaning of the indoor heat exchangers 24a and 24b is housed in the indoor unit chamber R3. The return hole cover 40 is described below.

Further, the heat pump 20 has, as non-illustrated components, an expander for depressurization of the refrigerant, a gas-liquid separator for separation of the gaseous refrigerant from the liquid refrigerant, and refrigerant piping to circulate the refrigerant.

The heat pump 20 includes multiple systems, that is, first-fourth refrigeration cycle systems (four systems). The first refrigeration cycle includes as component elements the compressor 21a, the outdoor heat exchanger 22a, and the indoor heat exchanger 24a. The second refrigeration cycle includes as component elements the compressor 21b, the outdoor heat exchanger 22b, and the indoor heat exchanger 24b. The third refrigeration cycle includes as component elements the compressor 21c, the outdoor heat exchanger 22c, and the indoor heat exchanger 24a. The fourth refrigeration cycle includes as component elements the compressor 21d, the outdoor heat exchanger 22d, and the indoor heat exchanger 24b.

One indoor heat exchanger 24a is used jointly by the first and third refrigeration cycles, and the other indoor heat exchanger 24b is used jointly by the second and fourth refrigeration cycles.

Among the outdoor heat exchanger 22a-22d set and the indoor heat exchangers 24a and 24b set, one set functions as condensers for causing condensation of the refrigerant, and the other set functions evaporators for causing vaporization of the refrigerant.

Hereinafter, operation of the heat pump 20 is described by citing an example in which the outdoor heat exchangers 22a-22d are used as condensers, the indoor heat exchangers 24a and 24b are used as evaporators, and the passenger compartment of the railway car is cooled. Further, operation of the firstfourth refrigeration cycles is similar, and thus operation of the first refrigeration cycle is described as a representative example.

The refrigerant compressed by the compressor 21a is sent to the outdoor heat exchanger 22a serving as a condenser. The outdoor heat exchanger 22a releases heat to the surroundings, thereby liquefying the refrigerant. The air heated by the outdoor heat exchanger 22a is discharged to the exterior by the outdoor fan 23a.

The refrigerant liquefied at the outdoor heat exchanger 22a passes through the expander, and is sent to the indoor heat exchanger 24a serving as an evaporator. The indoor fan 25a in the indoor unit chamber R3 sucks into the indoor unit chamber R3 through the return hole H1 the air of the passenger compartment of the railway car, causes the intake air to pass through the indoor heat exchanger 24a, and returns the air to the passenger compartment through a non-illustrated blown air port positioned immediately below the indoor fan 25a.

The indoor heat exchanger 24a causes vaporization of the refrigerant by absorbing heat from the air cycling between the passenger compartment of the railway car and the indoor unit chamber R3. The air cooled by the indoor heat exchanger 24a then is returned by the indoor fan 25a to the passenger compartment. The refrigerant vaporized by the indoor heat exchanger 24a returns to the compressor 21a via the gas-liquid separator. The refrigerant circulates in the aforementioned order.

The air conditioner 100 for railway car use according to the present embodiment is characterized particularly in that a return hole cover 40 is arranged at the circumference of each of the return holes H1 and H2 of the indoor chamber R3. The placement location and the configuration of the return hole cover 40 are described below. The arrangement relationships between the return hole H2, the return hole cover 40, the indoor heat exchanger 24b, and the indoor fan 25b within the indoor unit chamber R3 are similar to the arrangement relationships between the return hole H1, the return hole cover 40, the indoor heat exchanger 24a, and the indoor fan 25a, and thus the later arrangement relationships are described as a representative example.

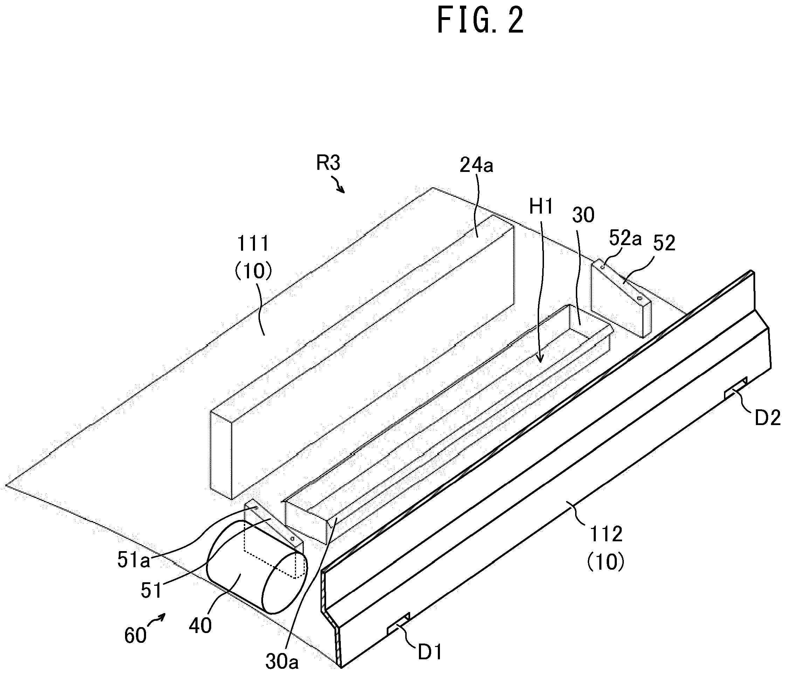

As illustrated in FIG. 2, the indoor heat exchanger 24a is erected on the bottom face 111 of the casing 10 in the indoor unit chamber R3. The return hole H1 opens toward the indoor heat exchanger 24a. The return hole H1 is formed in the bottom face 111 of the casing 10, and communicates with a non-illustrated passenger compartment of the railway car located further below the bottom face 111.

The return hole H1 in top view has an elongated rectangular shape such that the longitudinal direction thereof is parallel to one direction, specifically the travel direction of the railway car. The indoor heat exchanger 24a also extents lengthwise and parallel to the longitudinal direction of the return hole H1.

The casing 10 has a circumferential wall 30 standing from the bottom face 111. The circumferential wall 30 surrounds the entire circumference of the return hole H1. In top view, the circumferential wall 30 has an elongated rectangular frame shape corresponding to the rectangular shape of the return hole H1.

The indoor heat exchanger 24a and the side face 112 of the casing 10 oppose one another with the return hole H1 and the circumferential wall 30 sandwiched between the side face 112 and the casing 10. Water discharge ports D1 and D2 of the side face 112 of the casing 10 are formed at positions lower than the upper edge of the circumferential wall 30, that is, specifically at positions in the lower edge of the side face 112. The water discharge ports D1 and D2 are used for discharging to the exterior of the casing 10 moisture in the air condensed by the indoor heat exchanger 24a.

At the circumference of the return hole H1 in the interior of the casing 10, a covering tool 60 is arranged for covering the return hole H1 from the interior of the casing 10 to prevent dust or wash water flowing out to the passenger compartment from the indoor heat exchanger 24a during cleaning of the indoor heat exchanger 24a. The covering tool 60 has a return hole cover 40 for covering the return hole H1 and a pair of support stands 51 and 52 for attachably-detachably supporting the return hole cover 40.

The support stands 51 and 52 each have a plate-like shape, sandwich the return hole H1 and the circumferential wall 30 therebetween, and are arranged facing one another in the longitudinal direction of the return hole H1.

One support stand 51 is larger than the face of the circumferential wall 30 facing the support stand 51. That is to say, surface area of a projection region formed by projecting the opposing face of the circumferential wall 30 against the support stand 51 is smaller than a surface area of the surface of the support stand 51 opposing the circumferential wall 30.

Similarly, the other support stand 52 is larger than the face of the circumferential wall 30 facing the support stand 52. That is to say, a surface area of a projection region formed by projecting the opposing face of the circumferential wall 30 against the support stand 52 is smaller than a surface area of the surface of the support stand 52 opposing the circumferential wall 30.

The lower faces of the support stands 51 and 52 are fixed to the bottom face 111 of the casing 10. The upper faces of the support stands 51 and 52 are tilted downward in the direction of the side face 112 of the casing 10. Further, screw holes 51a are formed in the upper face of the support stand 51, and screw holes 52a are similarly formed in the upper face of the support stand 52.

The return hole cover 40 is arranged at a side of one support stand 51 opposite from the return hole H1. FIG. 2 illustrates the return hole cover 40 stored in a compactly folded state. When the return hole cover 40 is spread out to assume a shape covering the return hole H1, the support stands 51 and 52 support the return hole cover 40 in the spread-out form.

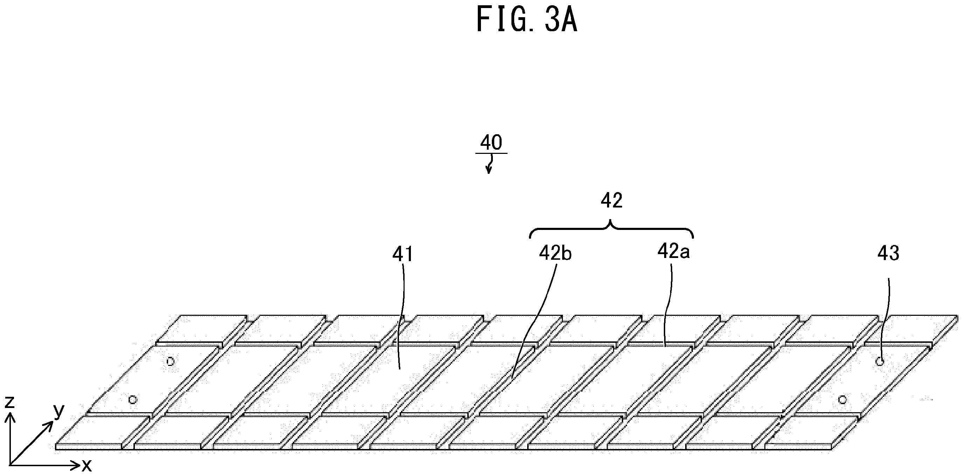

As illustrated in FIG. 3A, the return hole cover 40 has rigid portions 41 that are rigid, and bending portions 42 that bent more readily than the rigid portions 41. As illustrated, the return hole cover 40 is deployable in a flat manner without bending the bending portions 42. In top view, the return hole cover 40 deployed in the flat manner has a rectangular shape that is elongated in one direction. The description continues below after defining an XYZ orthogonal coordinate system in which the longitudinal direction is the X-axis direction and the thickness direction is the Z-axis direction.

In the flatly deployed state of the return hole cover 40, the bending portion 42 includes: first grooves 42a as two first linear portions arranged one after another along the Y-axis direction perpendicular to the X-axis direction and each extending linearly in the X-axis direction as a first direction; and second grooves 42b as nine second linear portions arranged one after another along the X-axis direction and each extending linearly in the Y-axis direction.

Each of the first grooves 42a extends from one X-axis direction end to the other end of the return hole cover 40. The spacing between the mutually adjacent first grooves 42a is larger than the transverse direction width perpendicular to the longitudinal direction of the return hole H1 illustrated in FIG. 2.

Further, each of the second grooves 42b intersects the two first grooves 42a and extends from one Y-axis direction end to the other end of the return hole cover 40. The spacing between the mutually adjacent second grooves 42b is smaller than the longitudinal direction width of the return hole H1 illustrated in FIG. 2.

Although the first grooves 42a and the second grooves 42b are formed from the same material as that of the ridge portions 41, the cross-sectional shapes perpendicular to the extension direction of the grooves are concave, and thicknesses of the first grooves 42a and the second grooves 42b are less than that of the rigid portion 41. Thus these grooves bend more readily than the rigid portions 41.

Specifically, the return hole cover 40 is formed from silicone resin as a material having water-impermeability and flexibility. The return hole cover 40, due to elasticity thereof, can be repeatedly bent and unbent at the first grooves 42a and the second grooves 42b.

Further, at both end portions in the X-axis direction of the return hole cover 40, through-holes 43 are formed as attachment portions for attachably-detachably fixing to the support stands 51 and 52 illustrated in FIG. 2. The through-holes 43 are positioned between the two first grooves 42a.

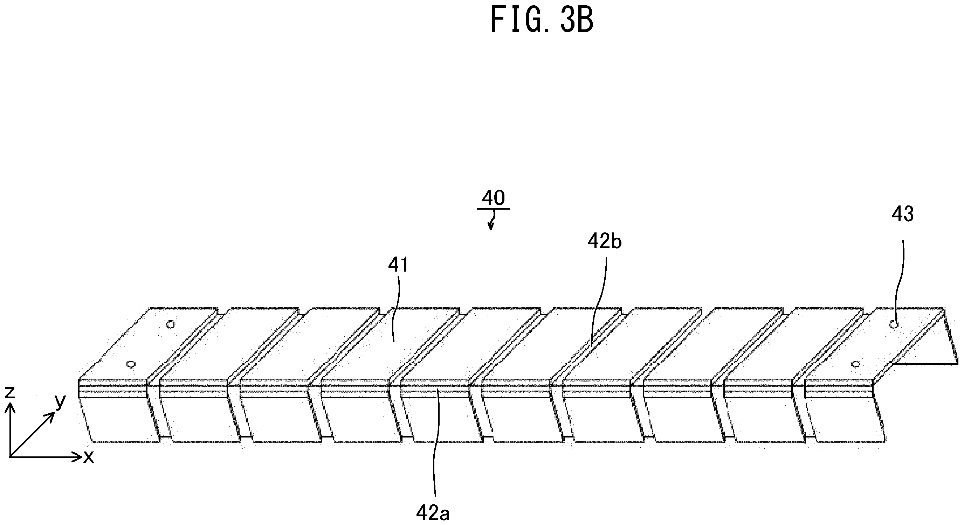

FIG. 3B illustrates the return hole cover 40 in a form (referred to hereinafter as the first form) that covers the return hole H1. The first form is a form in which each of the two first grooves 42a is bent over. Specifically, the two first grooves 42a are bent over in the YZ cross section so that the YZ cross section of the return hole cover 40 has a square-cornered- U shape.

Due to bending within the YZ cross section along the first grooves 42a in this manner, bending strength of the return hole cover 40 against a load in a direction parallel to the YZ cross section increases. Specifically, strength against bending in the XZ plane increases. Thus even when there is support only at both X-axis direction ends, the return hole cover 40 of the first form hardly flexes under weight of the return hole cover 40 and achieves shape maintainability by maintaining the return hole cover 40 of the first form.

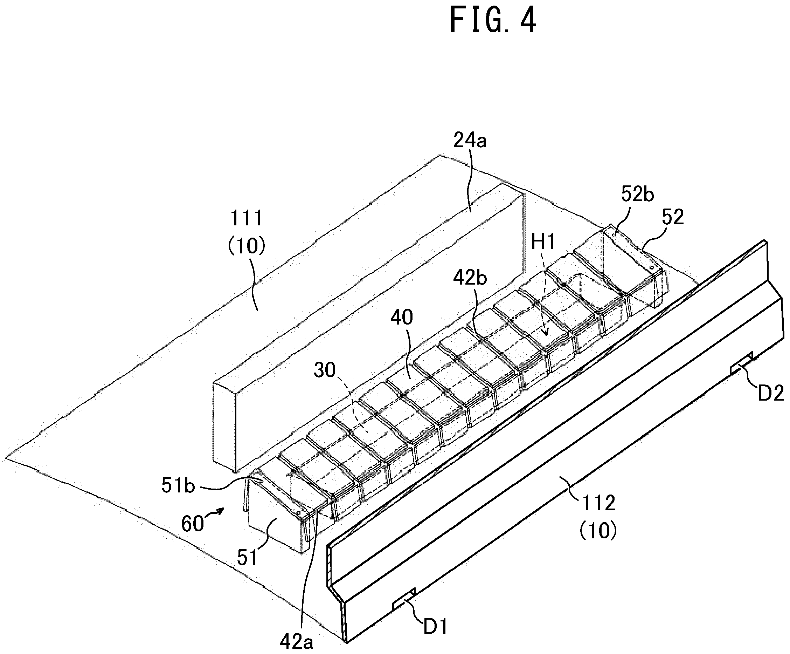

FIG. 4 illustrates a state in which the return hole H1 is covered by the return hole cover 40 of the first form. When the return hole cover 40 is oriented with the longitudinal direction of the return hole H1 directed in the aforementioned X-axis direction, at both end portions in the longitudinal direction, portions spanning from one first groove 42a to the other first groove 42a are supported by the support stands 51 and 52. In this manner, the return hole cover 40 of the first form is supported in the form of a beam supported at both ends.

In the aforementioned manner, the return hole cover 40 of the first form has increased bending rigidity due to bending over of the first grooves 42a, and thus the first form can maintain the first form against load of the return hole cover 40 with hardly any flexing.

Further, the upper faces of the support stands 51 and 52 are tilted downward toward the side face 112, and thus the portion of the return hole cover 40 of the first form facing the return hole H1, and specifically the portion between the two first grooves 42a, tilts downward toward the side face 112.

However, a region formed by projecting the return hole cover 40 against the bottom face 111 of the casing 10 encloses the return hole H1 and the circumferential wall 30. Further, one end portion of the return hole cover 40 in the transverse direction of the return hole H1 bends over at one of the first grooves 42a, hangs down toward the bottom face 111, and opposes the circumferential wall 30. In the same manner, the other end portion of the return hole cover 40 in the transverse direction of the return hole H1 bends over at the other first groove 42a, hands down toward the bottom face 111, and opposes the circumferential wall 30.

The return hole cover 40 of the first form is attachably-detachably fixed by fasteners capable of repeated attachment to and detachment from the support stands 51 and 52. Specifically, the return hole cover 40 is fixed by the screw 51b as the aforementioned fastener to one support stand 51, and is fixed by the screw 52b as the aforementioned fastener to the other support stand 52. The screw 51b is inserted through the through-hole 43 illustrated in FIG. 3B, and is screwed into the screw hole 51a illustrated in FIG. 2. The screw 52b is used in a similar manner.

The indoor heat exchanger 24a is cleaned in a state in which the first from of the return hole cover 40 is fixed to the support stands 51 and 52 in this manner. A high pressure cleaning apparatus is used for the cleaning.

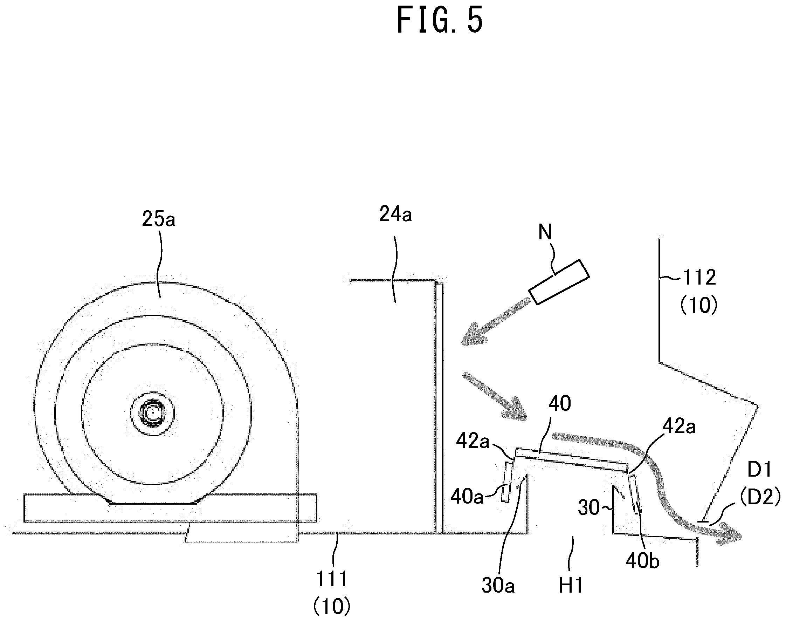

As illustrated in FIG. 5, high pressure water is sprayed from the nozzle N of the high pressure cleaning apparatus toward the indoor heat exchanger 24a. Due to coverage of the return hole H1 by the return hole cover 40, wash water splashing back from the indoor heat exchanger 24a does not enter the return hole H1.

Further, due to the tilt of the upper surface of the return hole cover 40, the wash water that splashes back toward the outer surface (referred to hereinafter as the upper surface) of the portion of the return hole cover 40 opposing the return hole H1 flows down smoothly at the side face 112 side. At this time, the second grooves 42b of the upper surface of the return hole cover 40 function as guide grooves to direct the wash water toward the side face 112 side. Due to the tilt of the bottom face 111 toward the water discharge ports D1 and D2, the wash water flowing downward at the side face 112 side from the return hole cover 40 is directed to the water discharge ports D1 and D2, and discharges to the exterior of the indoor unit chamber R3 from the water discharge ports D1 and D2.

Further, the lower edge of the end portion 40a of the return hole cover 40 bent at and hanging down from the first groove 42a nearest the indoor heat exchanger 24a is positioned below the upper edge of the circumferential wall 30 opposing the end portion 40a. In the same manner, the lower edge of the end portion 40b of the return hole cover 40 bent at and hanging down from the first groove 42a nearest the side face 112 is positioned below the upper edge of the circumferential wall 30 opposing the end portion 40b. Thus even if the wash water blown in the direction parallel to the bottom face 111 enters the return hole H1, the wash water is stopped by the return hole cover 40.

Further, at the upper end portion of the circumferential wall 30, a flap 30a is formed that bends back toward the bottom face 111. The flap 30a opens with approach to the aforementioned end portions 40a and 40b of the return hole cover 40. Thus the wash water hardly enters between the circumferential wall 30 and the aforementioned end portions 40a and 40b of the return hole cover 40, and wash water splashed back by the bottom face 111 is prevented from entering the return hole H1.

After completion of cleaning of the indoor heat exchanger 24a in this manner, the return hole cover 40 is removed from the support stands 51 and 52 and is compacted. Further, after removal of the return hole cover 40, the screws 51b and 52b illustrated in FIG. 4 are returned to the screw holes 51a and 52a, respectively, illustrated in FIG. 2.

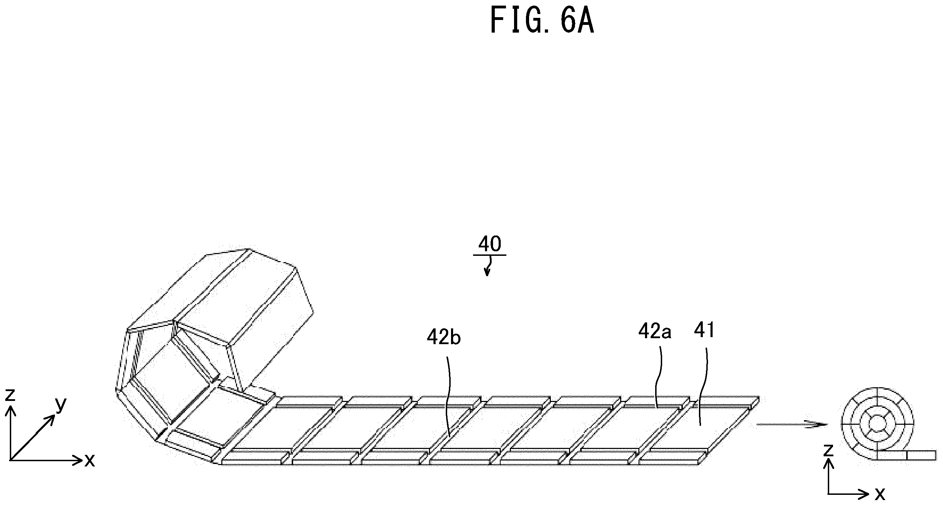

The procedure for compacting the return hole cover 40 is described with reference to the left-hand drawing of FIG. 6A. The first grooves 42a are unbent to flatly deploy the return hole cover 40, and then each of the second grooves 42b is bent over to curl the return hole cover 40 in the X-axis direction.

The right-hand drawing of FIG. 6A illustrates the return hole cover 40 compacted in this manner in a state, referred to below as the second form, in which the return hole cover 40 is more compact than the return hole cover 40 in the first form. The return hole cover 40 in the second form is compacted in the X-axis direction.

As illustrated in FIG. 2, the return hole cover 40 of the second form is arranged at a return hole H1-opposite side of one support stand 51 in the longitudinal direction of the return hole H1, and is fixed to the support stand 51 by a linear member such as a cord, belt, or the like. The return hole cover 40 of the second form is stored in within the casing 10 in the state illustrated in FIG. 2. Then operation of the heat pump 20 that includes the indoor heat exchanger 24a is restarted.

As described above, in the present embodiment, firstly the indoor heat exchanger 24a is cleaned in a state in which the return hole H1 is covered from the interior of the casing 10 by the return hole cover 40 of the first form. Then the return hole cover 40 is compacted into the second form, is arranged at the side of the support stand 51, and heat exchange of the indoor heat exchanger 24a is restarted. The below-described effects are obtained by the present embodiment.
(1) The return hole cover 40 is stored within the casing 10 in the compactly-folded second form, and thus the air flow in the indoor unit chamber R3 is hardly disturbed during operation of the heat pump 20. Thus good heat exchange efficiency of the indoor heat exchanger 24a can be maintained.
(2) The return hole cover 40 of the second form is stored in a region that is not between the return hole H1 and the indoor heat exchanger 24a, and specifically is stored at the side of the support stand 51. Thus the return hole cover 40 in the stored state hardly affects the air flowing from the return hole H1 to the indoor heat exchanger 24a. The air flow is similarly hardly affected by the support stands 51 and 52. This contributes to the maintenance of good heat exchange efficiency of the indoor heat exchanger 24a.
(3) Due to the first form in which the return hole cover 40 bends along the first grooves 42a extending in the X-axis direction, the return hole cover 40 can be supported by a small number of support points due to increasing of strength with respect to bending within a plane parallel to the X-axis direction, and specifically bending within the XZ plane. Specifically, by support just at both ends in the X-axis direction, the return hole cover 40 can maintain the first form against weight of the return hole cover 40. The two support stands 51 and 52 are sufficient as members supporting the return hole cover 40, and thus the internal structure of the indoor unit chamber R3 hardly becomes complex, and therefore the air flow within the indoor unit chamber R3 is hardly disturbed.
(4) The return hole cover 40 differs from a vinyl plastic sheet in that the return hole cover 40 has the bending portions 42 that preferentially bend, and thus an operator can rapidly make the first form and the second form change into each other. Thus the protection operation to cover the return hole H1 prior to cleaning and the tidying operation after cleaning are performed quickly in comparison to the case in which the return hole H1 is protected by use of the vinyl plastic sheet.

Further, due to the return hole cover 40 having the rigid portions 41 that bend less readily than the bending portions 42, in contrast to the vinyl plastic sheet, the return hole cover 40 has excellent stability in each of the first and second forms. In particular, the return hole cover 40 stably maintains the first form and is placed on the support stands 51 and 52, and thus one operator can readily perform the placement operation and the operation of screwing to the support stands 51 and 51.

Further, although the return hole cover 40 transitions to the second form by rounding in the X-axis direction as illustrated in FIG. 6A in the aforementioned embodiment, the second form is not limited to this example.

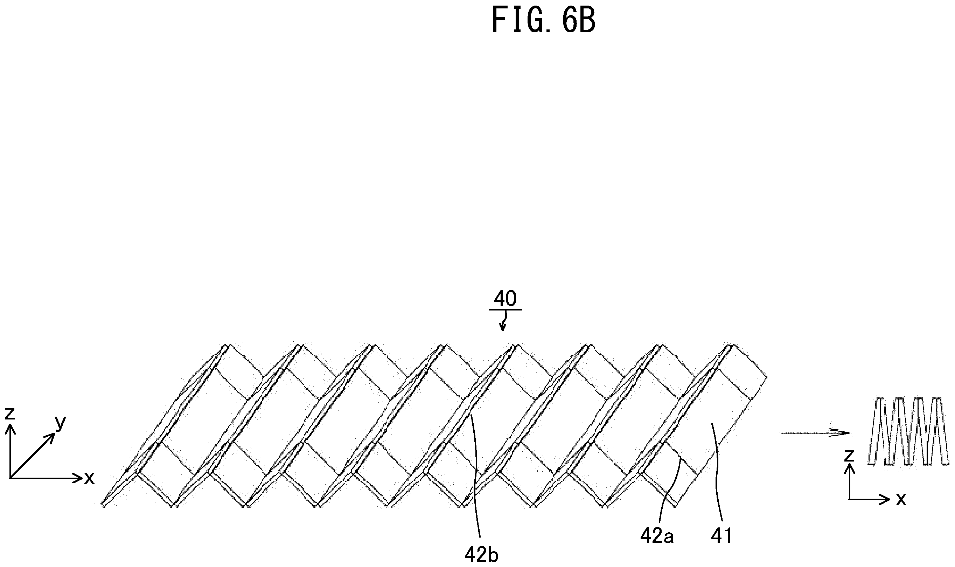

As illustrated in FIG. 6B, the return hole cover 40 may be compacted in the X-axis direction by folding in a zig-zag manner so as to form alternating peaks and valleys by bending of the second grooves 42b alternatingly in different directions. The right-hand drawing of FIG. 6B illustrates the return hole cover 40 of the second form compacted in this manner.

### Embodiment 2

Although the aforementioned Embodiment 1 uses a return hole cover 40 capable of compaction by folding, a return hole cover may be used that is capable of compaction by use of a stretching-contracting structure body. A specific example of the stretching-contracting structure body is described below.

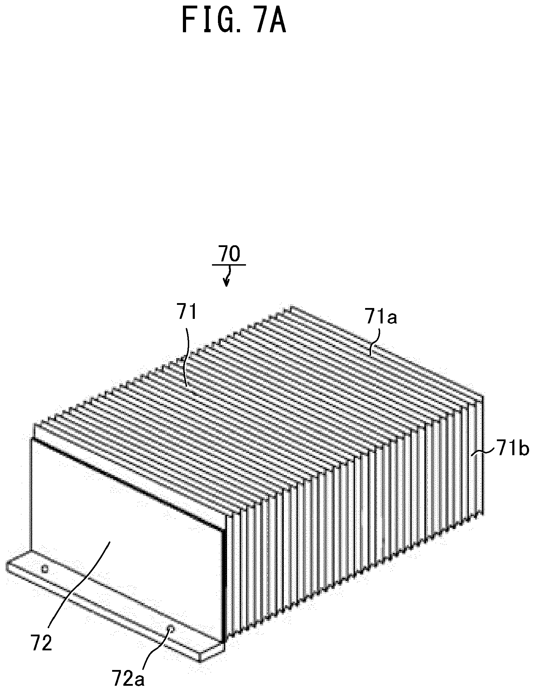

As illustrated in FIG. 7A, the return hole cover 70 of the present embodiment has a bellows structure body 71 as a stretching-contracting structure body freely stretching and contracting in the longitudinal direction of the return hole H1, and a base end portion 72 for fixing to the casing 10 and supporting one end portion of the bellows structure 71 with respect to the expansion-contraction direction of the bellows structure body 71. The bellows structure body 71 is made of silicone resin, and the base end portion 72 is made of metal. Bolt holes 72a for fixing the base end portion 72 to the casing 10 are formed in the base end portion 72.

The bellows structure body 71 has an upper surface portion 71a facing the return hole H1 and a pair of side face portions 71b hanging downward from both ends of the upper surface portion 71a in the transverse direction perpendicular to the expansion-contraction direction of the bellows structure body 71.

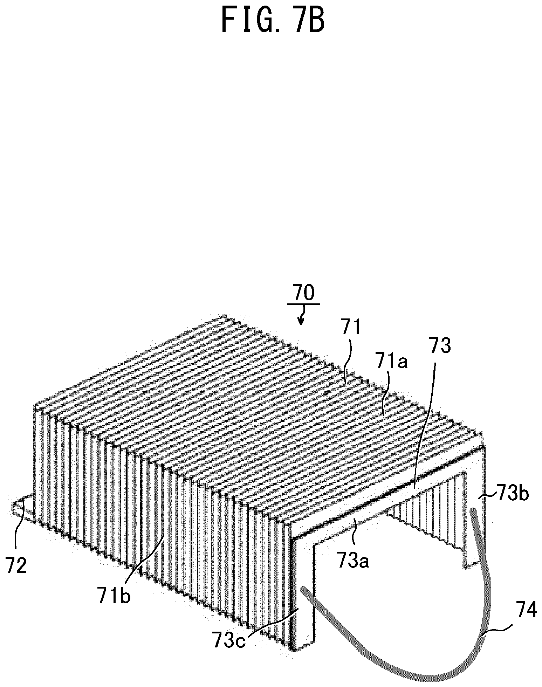

FIG. 7B illustrates the other end portion of the return hole cover 70 with respect to the expansion-contraction direction of the bellows structure body 71. As illustrated, the interior surrounded by the upper surface portion 71a and the pair of side face portions 71b is hollow.

Further, at the other end portion with respect to the expansion-contraction direction of the bellows structure body 71, the return hole cover 70 has a frame 73 that has a gate shape corresponding to the shape of the bellows structure body 71. The gate-shaped frame 73 is made of metal and has a horizontal portion 73a extending in the transverse direction and a pair of vertical portions 73b and 73c hanging down from both ends of the horizontal portion 73a.

Further, an elastically stretching and contracting elastic belt 74 is attached to height-direction intermediate positions of the frame 73. One end of the elastic belt 74 is tied to the height-direction intermediate position of one vertical portion 73b, and the other end is tied to the height-direction intermediate position of the other vertical portion 73c.

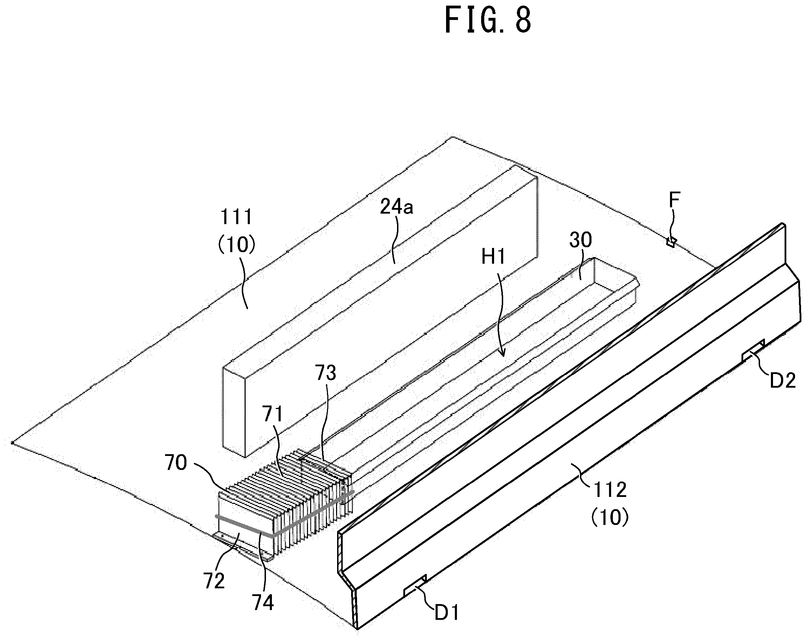

As illustrated in FIG. 8, in a direction such that the expansion-contraction direction of the bellows structure body 71 matches the longitudinal direction of the return hole H1, the return hole cover 70, in the second form of greatest contraction in the expansion-contraction direction, is fixed to a position at which the entire region of the return hole H1 is open. The fixing is performed by attachment of the base end portion 72 to the bottom face 111 of the casing 10 by a bolt.

Further, in the return hole cover 70 of the second form, the elastic belt 74 is stretched over the base end portion 72 such that a contraction-direction elastic force acts on the bellows structure body 71. Thus the return hole cover 70 stably maintains the second form in which the bellows structure 71 is contracted.

Further, in the present embodiment, a hook F is arranged projecting from the bottom face 111 in the bottom face 111 of the casing 10. The hook F is arranged at a position opposite to the base end portion 72 and sandwiching the return hole H1 and the circumferential wall 30 in the longitudinal direction of the return hole H1 as seen in top view.

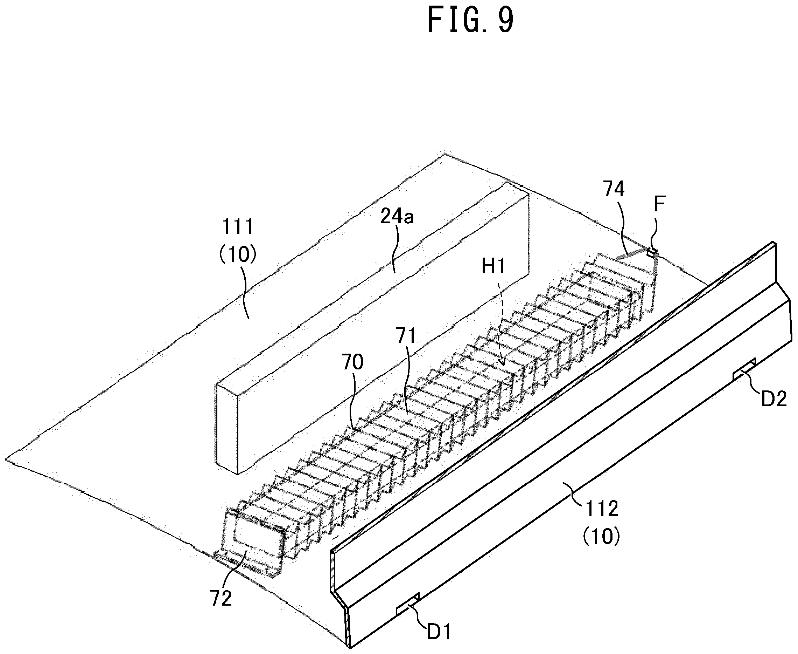

FIG. 9 illustrates the return hole cover 70 of the first form with the bellows structure body 71 stretched in the expansion-contraction direction. In the first form, the return hole cover 70 covers the entire region of the return hole H1. Further, for the return hole cover 70 of the first form, the elastic belt 74 attaches to the hook F such that the stretching direction elastic force acts on the bellows structure body 71. Thus the return hole cover 70 stably maintains the first form in which the bellows structure body 71 is stretched.

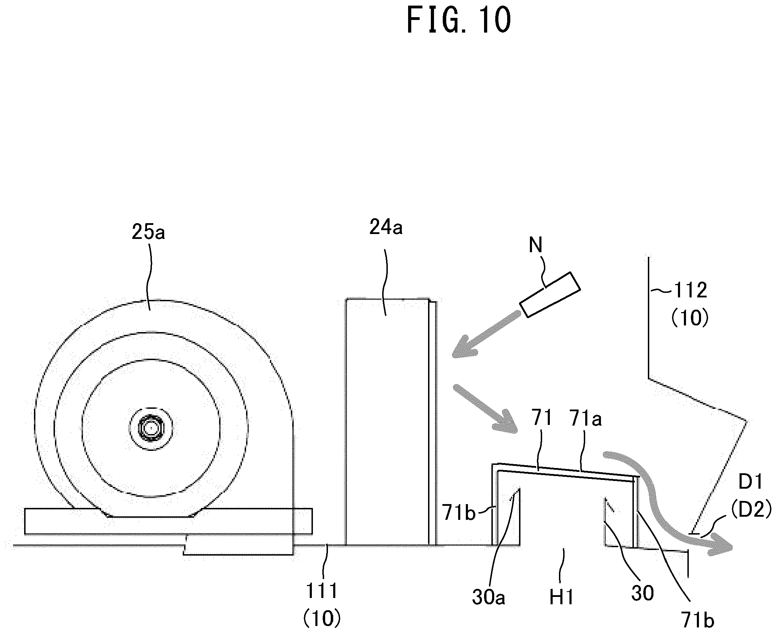

As illustrated in FIG. 10, the portion of the bottom face 111 of the casing 10 between the circumferential wall 30 and the side face 112 tilts downward from the circumferential wall 30 position toward the side face 112. With such tilting, the return hole cover 70 of the first form covers the return hole H1 in a state in which the upper surface portion 71a of the bellows structure body 71 tilts downward toward the side face 112 of the casing 10. Thus the wash water splashing back toward the upper surface portion 71a is directed smoothly to the water discharge ports D1 and D2.

The bottom edges of each of the mutually opposed side face portions 71b of the bellows structure body 71 contact the bottom face 111 of the casing 10. Thus even though the wash water sprayed in the direction parallel to the bottom face 111 approaches the return hole H1, the wash water is stopped by the side face portion 71b.

The return hole cover 70 of the above-described embodiment also is stored within the casing 10 in the compactly-contracted second form. Further, the storage position is at the longitudinal-direction side of the return hole H1 and is a region that is not between the return hole H1 and the indoor heat exchanger 24a. Thus hardly any disturbance occurs in the air flow of the indoor unit chamber R3 during operation of the heat pump 20, and the good heat exchange efficiency of the indoor heat exchanger 24a can be maintained.

Further, the operator can rapidly and easily change between the first form and the second form by stretching and contracting the bellows structure body 71. Thus the protection operation to cover the return hole H1 prior to cleaning of the indoor heat exchanger 24a and the tidying operation after cleaning are performed quickly by a single operator.

### Embodiment 3

Although a return hole cover 70 is used in the aforementioned Embodiment 2 that uses stretching and contracting of the bellows structure body, a telescopic structure body may also be used as the stretching-contracting structure body. A specific example is described below.

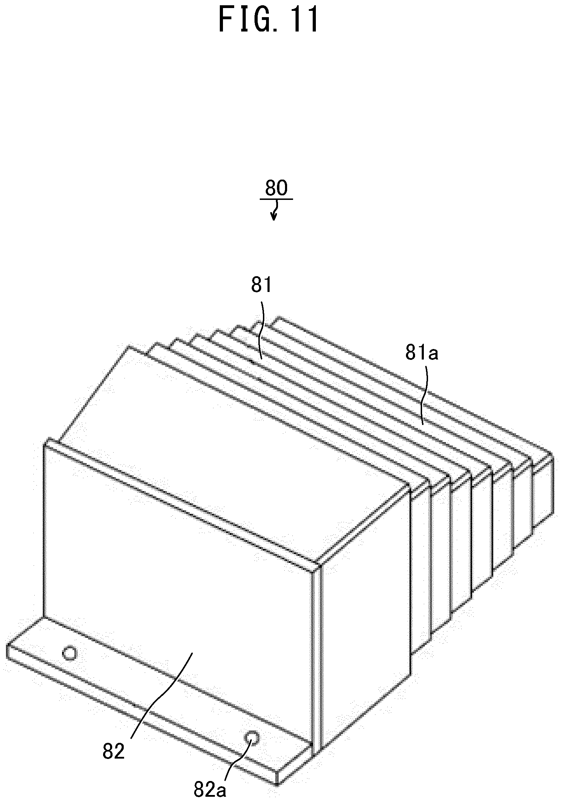

As illustrated in FIG. 11, a return hole cover 80 according to the present embodiment has the telescopic structure body 81 serving as a stretching-contracting structure body freely stretching and contracting in the longitudinal direction of the return hole H1, and a base end portion 82 for fixing to the casing 10 and arranged at one end portion with respect to the expansion-contraction direction of the telescopic structure body 81. The telescopic structure body 81 and the base end portion 82 are made of stainless steel. Bolt holes 82a for fixing the base end portion 82 to the casing 10 are formed in the base end portion 82.

The telescopic structure body 81 has a structure that ties together a plurality of gate-shaped cover pieces 81a that are nested together, each having a different size such that a single cover piece 81a slides relative to the cover piece 81a that is slightly larger, so that the single cover piece 81a freely appears and disappears.

The return hole cover 80 according to the present embodiment, in addition to effects similar to those of the return hole cover 70 having the aforementioned bellows structure body 71, can maintain stably the first form by frictional force between the cover pieces 81a during sliding. Thus the fastener for maintaining the return hole cover 80 in the first form, specifically such as the components corresponding to the hook F and the elastic belt 74 illustrated in FIG. 9, is unnecessary, thereby enabling simplification of the configuration.

Embodiments of the present disclosure are described above. The present disclosure is not limited to these embodiments, and the modifications described below are possible.

Although the return hole cover 40 remains in the indoor unit chamber R3 after cleaning of the indoor heat exchanger 24a in the aforementioned Embodiment 1, the return hole cover 40 may be stored in a different location without remaining in the indoor unit chamber R3. The return hole cover 40 in this case, in contrast to the vinyl plastic sheet, also has the bending portions 42 that preferentially bend, and thus changing between the first form and the second form is performed quickly, and stability in each of the first and second forms is excellent due to the return hole cover 40 having the rigid portions 41 that hardly bend. Thus in comparison to the case in which the vinyl plastic sheet is used, an effect is obtained of rapid performance of the protection operation of covering the return hole H1 and the operation of tidying up after cleaning.

Although the return hole cover 40 and the bellows structure body 71 in the aforementioned Embodiments 1 and 2 are formed from silicone resin, the material of the return hole cover 40 and the bellows structure body 71 is not limited to silicone resin. Resins or rubbers can be widely used as materials having water-impermeability and flexibility. Further, a non-flammable resin may be used, and thus in the case in which the return hole cover 40 and the bellows structure body 71 are exposed to high temperature, and specifically when the indoor heat exchanger 24a serves as the condenser, durability of the return hole cover 40 and the bellows structure body 71 can increase by the use of the non-flammable resin. Further, in the case in which a liquid such as water, a cleaning agent, or the like is not used for cleaning, the return hole cover 40 and the bellows structure body 71 are not necessarily water-impermeable. Further, although the telescopic structure body 81 in the aforementioned Embodiment 3 is formed from stainless steel, this material is not limiting, and metals can be widely used such as aluminum, titanium, or the like. The return hole cover 40, the bellows structure body 71, and the telescopic structure 81 may have resistance to fungi and bacteria.

Although the return hole cover 40 of the first form has a square-cornered-U shape bent at two locations in the YZ cross section in the aforementioned Embodiment 1, bending strength with respect to loading in the direction parallel to the YZ cross section can be increased by bending at just one location so as to form an L shape. Further, bending rigidity in the first form can be increased further by using, as the first form, a form that form in which the return hole cover 40 is bends within multiple cross sections, that is to say, specifically is bends not only within the YZ cross section but also within the XZ cross section.

Although the support stands 51 and 52 are used in the aforementioned Embodiment 1, the support stands 51 and 52 are not necessarily required. The return hole cover 40 of the first form may directly overlay the circumferential wall 30 to cover the circumferential wall 30. Further, the fastener is not necessarily used for fixing the return hole cover 40 of the first form, and the return hole cover 40 of the first form may be simply placed on the support stands 51 and 52 or the circumferential wall 30. The return hole cover 40 of the first form also in this case is able to maintain the mounted state stably under the weight of the return hole cover 40.

In the aforementioned Embodiment 1, the return hole cover 40 of the second form may be stored in a state in which the return hole cover 40 of the second form is sandwiched between the support stand 51 and the third partition plate 15 illustrated in FIG. 1. The distance between the support stand 51 and the third partition plate 15 can be designed in this manner. Further, contamination during storage may be prevented by containing the return hole cover 40 of the second form within a storage bag.

Although the elastic belt 74 is used in the aforementioned Embodiment 2 as the fastener for maintaining the first form in which the bellows structure body 71 covers the return hole H1, such use is not limiting. Instead of the elastic belt 74, or in addition to the elastic belt 74, another fastener may be used such as a catch clip, a latch, a threaded component, or the like. The telescopic structure body 81 may also use such a fastener.

### Industrial Applicability

The air conditioner of the present disclosure can be used widely for air conditioning of the air-conditioning target room. In particular, the air conditioner of the present disclosure can be used with advantage for performing air conditioning of a passenger compartment for carrying passengers in a railcar.

### Reference Signs List

10 Casing
11 Base frame
111 Bottom face
112 Side face
12 Top face
13 First partition plate
14 Second partition plate
15 Third partition plate
16 Fourth partition plate
20 Heat pump
21a-21d Compressor
22a-22d Outdoor heat exchanger
23a, 23b Outdoor fan
24a, 24b Indoor heat exchanger (heat exchanger)
25a, 25b Indoor fan
30 Circumferential wall
30a Flap
40 Return hole cover (ventilation port cover)
40a, 40b End portion
41 Rigid portion
42 Bending portion
42a First groove (first linear portion)
42b Second groove (second linear portion)
43 Through-hole
51,52 Support stand
51a, 52a Screw hole
51b, 52b Screw
60 Covering tool
70 Return hole cover (ventilation port cover)
71 Bellows structure body (stretching-contracting structure body)
71a Upper surface portion
71b Side face portion
72 Base end portion
72a Bolt hole
73 Frame
73a Horizontal portion
73b, 73c Vertical portion
74 Elastic belt
80 Return hole cover (ventilation port cover)
81 Telescopic structure body (stretching-contracting structure body)
81a Cover piece
82 Base end portion
82a Bolt hole
100 Air conditioner for railway car use (air conditioner)
D1, D2 Water discharge port
F Hook
H1, H2 Return hole (ventilation port)
N Nozzle
R1 First compressor chamber
R2 First outdoor unit chamber
R3 Indoor unit chamber
R4 Second outdoor unit chamber
R5 Second compressor chamber

## Claims

1. An air conditioner (100) comprising :
a casing (10) in which is formed a ventilation port (H1, H2) communicating with an air-conditioning target room to be air-conditioned;
a heat exchanger (24a, 24b) housed within the casing (10), to perform heat exchange between the heat exchanger (24a, 24b) and air flowing into and out of the casing (10) through the ventilation port (H1, H2); and
a ventilation port cover (40) comprising rigid portions (41) that are rigid and bending portions (42) that bend more easily than the rigid portions (41), enabling transformation between a first form and a second form in which the ventilation port cover (40) is more compactly folded than when in the first form, the ventilation port cover (40) in the first form being detachably fixed to the casing (10) in a state that covers the ventilation port (H1, H2) from an interior of the casing (10);
wherein the ventilation port cover (40) is flatly deployable;
the air conditioner (100) being **characterized in that**:
the bending portions (42) of the ventilation port cover (40), in a flatly deployed state of the ventilation port cover (40), include: (i) at least one first groove (42a) linearly extending in a first direction, and (ii) a plurality of second grooves (42b) each extending linearly in a second direction that intersects the first direction, the plurality of second grooves (42B) being aligned in the first direction.

2. The air conditioner (100) according to claim 1, wherein when the ventilation port cover (40) assumes the first form, the at least one first groove (42a) is bent over in a cross section that is perpendicular to the first direction so as to increase the bending strength of the ventilation port cover (40) with respect to a load in a direction parallel to the cross section.

3. The air conditioner (100) according to claim 2, wherein in the second form the ventilation port cover (40) is compacted in a direction perpendicular to the cross section and parallel to the first direction.

4. The air conditioner (100) according to claims from 1 to 3, wherein: it comprises a return hole (H1, H2) serving as the ventilation port (H1, H2); the return hole (H1, H2) has in top view an elongated rectangular shape such that the longitudinal direction of the return hole (H1, H2) is parallel the main development direction of the elongated rectangular shape; the first direction is parallel to the longitudinal direction of the return hole (H1, H2); and the second direction is perpendicular to the longitudinal direction of the return hole (H1, H2).

5. The air conditioner (100) according to any one of claims 2 to 4, wherein the ventilation port cover (40) in the first form is supported at both ends in a direction perpendicular to the cross section and parallel to the first direction.

6. The air conditioner (100) according to any one of claims 1 to 5, wherein the ventilation port cover (40) is stored within the casing (10) in the second form.

7. The air conditioner (100) according to any one of claims 1 to 6, wherein
the ventilation port (H1, H2) is formed in a bottom face of the casing (10),
the casing (10) has a circumferential wall (30) rising from the bottom face (111), the circumferential wall (30) surrounding an entire circumference of the ventilation port (H1, H2),
a water discharge port (D1, D2) is formed in a side face of the casing (10) and is positioned below an upper edge of the of the circumferential wall (30), and
the ventilation port cover (40, 70) in the first form covers the ventilation port (H1, H2) in an orientation of the ventilation port cover (40, 70) such that a portion of the ventilation port cover (40, 70) facing the ventilation port (H1, H2) tilts downward toward the side face (112).

## Patentansprüche

1. Klimaanlage (100), umfassend:
ein Gehäuse (10), in dem eine Belüftungsöffnung (H1, H2) ausgebildet ist, die mit einem zu klimatisierenden Klimatisierungszielraum kommuniziert;
einen Wärmetauscher (24a, 24b), der innerhalb des Gehäuses (10) aufgenommen ist, um Wärmeaustausch zwischen dem Wärmetauscher (24a, 24b) und Luft, die durch die Belüftungsöffnung (H1, H2) in das Gehäuse (10) und aus diesem heraus strömt, auszuführen; und
eine Belüftungsöffnungsabdeckung (40), die starre Abschnitte (41), die starr sind, und biegsame Abschnitte (42), die sich im Vergleich zu den starren Abschnitten (41) leichter biegen, die eine Umwandlung zwischen einer ersten Form und einer zweiten Form, in der die Belüftungsöffnungsabdeckung (40) kompakter als in der ersten Form zusammengelegt ist, ermöglichen, umfasst, wobei die Belüftungsöffnungsabdeckung (40) in der ersten Form in einem Zustand, der die Belüftungsöffnung (H1, H2) von einer Innenseite des Gehäuses (10) abdeckt, am Gehäuse (10) lösbar fixiert ist;
wobei die Belüftungsöffnungsabdeckung (40) flach ausfahrbar ist;
wobei die Klimaanlage (100) **dadurch gekennzeichnet ist, dass**:
die biegsamen Abschnitte (42) der Belüftungsöffnungsabdeckung (40) in einem flach ausgefahrenen Zustand der Belüftungsöffnungsabdeckung (40) umfassen: (i) wenigstens eine erste Rille (42a), die linear in einer ersten Richtung verläuft, und (ii) mehrere zweite Rillen (42b), die jeweils linear in einer zweiten Richtung verlaufen, die die erste Richtung schneidet, wobei die mehreren zweiten Rillen (42b) in der ersten Richtung ausgerichtet sind.

2. Klimaanlage (100) nach Anspruch 1, wobei dann, wenn die Belüftungsöffnungsabdeckung (40) die erste Form annimmt, die wenigstens eine erste Rille (42a) in einem Querschnitt, der senkrecht zu der ersten Richtung ist, umgebogen ist, um die Biegefestigkeit der Belüftungsöffnungsabdeckung (40) in Bezug auf eine Last in einer Richtung parallel zu dem Querschnitt zu erhöhen.

3. Klimaanlage (100) nach Anspruch 2, wobei in der zweiten Form die Belüftungsöffnungsabdeckung (40) in einer Richtung senkrecht zu dem Querschnitt und parallel zu der ersten Richtung komprimiert ist.

4. Klimaanlage (100) nach den Ansprüchen 1 bis 3, wobei sie ein Rückführloch (H1, H2), das als die Belüftungsöffnung (H1, H2) dient, umfasst; wobei das Rückführloch (H1, H2) in Draufsicht eine längliche rechteckige Form aufweist, so dass die Längsrichtung des Rückführlochs (H1, H2) parallel zu der Hauptausbildungsrichtung der länglichen rechteckigen Form ist; wobei die erste Richtung parallel zu der Längsrichtung des Rückführlochs (H1, H2) ist; und die zweite Richtung senkrecht zu der Längsrichtung des Rückführlochs (H1, H2) ist.

5. Klimaanlage (100) nach einem der Ansprüche 2 bis 4, wobei die Belüftungsöffnungsabdeckung (40) in der ersten Form in einer Richtung senkrecht zum Querschnitt und parallel zu der ersten Richtung an beiden Enden gestützt wird.

6. Klimaanlage (100) nach einem der Ansprüche 1 bis 5, wobei die Belüftungsöffnungsabdeckung (40) in der zweiten Form innerhalb des Gehäuses (10) gelagert wird.

7. Klimaanlage (100) nach einem der Ansprüche 1 bis 6, wobei
die Belüftungsöffnung (H1, H2) in einer Bodenfläche des Gehäuses (10) ausgebildet ist,
das Gehäuse (10) eine Umfangswand (30) aufweist, die von der Bodenfläche (111) aufsteigt, wobei die Umfangswand (30) einen gesamten Umfang der Belüftungsöffnung (H1, H2) umgibt,
eine Wasserabführöffnung (D1, D2) in einer Seitenfläche des Gehäuses (10) ausgebildet ist und unter einer Oberkante der Umfangswand (30) positioniert ist, und
die Belüftungsöffnungsabdeckung (40, 70) in der ersten Form die Belüftungsöffnung (H1, H2) in einer Orientierung der Belüftungsöffnungsabdeckung (40, 70) bedeckt, so dass ein Abschnitt der Belüftungsöffnungsabdeckung (40, 70), der der Belüftungsöffnung (H1, H2) zugewandt ist, nach unten zu der Seitenfläche (112) hin kippt.

## Revendications

1. Climatiseur (100) comprenant :
un boîtier (10) dans lequel est formé un trou (H1, H2) de ventilation communiquant avec un espace cible de climatisation devant être climatisé ;
un échangeur de chaleur (24a, 24b) logé dans le boîtier (10), pour réaliser un échange de chaleur entre l'échangeur de chaleur (24a, 24b) et de l'air s'écoulant dans et hors du boîtier (10) à travers le trou (H1, H2) de ventilation ; et
un couvercle de trou de ventilation (40) comprenant des parties rigides (41) qui sont rigides et des parties de flexion (42) qui fléchissent plus facilement que les parties rigides (41), permettant une transformation entre une première forme et une deuxième forme dans laquelle le couvercle de trou de ventilation (40) est plié de manière plus compacte que lorsqu'il est dans la première forme, le couvercle de trou de ventilation (40) dans la première forme étant fixé de manière détachable au boîtier (10) dans un état qui couvre le trou (H1, H2) de ventilation par rapport à un intérieur du boîtier (10) ;
dans lequel le couvercle de trou de ventilation (40) est déployable à plat ;
le climatiseur (100) étant **caractérisé en ce que** :
les parties de flexion (42) du couvercle de trou de ventilation (40), dans un état déployé à plat du couvercle de trou de ventilation (40), comportent : (i) au moins une première rainure (42a) s'étendant linéairement dans une première direction, et (ii) une pluralité de deuxièmes rainures (42b) s'étendant chacune linéairement dans une deuxième direction qui croise la première direction, la pluralité de deuxièmes rainures (42b) étant alignées dans la première direction.

2. Climatiseur (100) selon la revendication 1, dans lequel lorsque le couvercle de trou de ventilation (40) prend la première forme, l'au moins une première rainure (42a) est fléchie dans une section transversale qui est perpendiculaire à la première direction de manière à augmenter la résistance à la flexion du couvercle de trou de ventilation (40) par rapport à une charge dans une direction parallèle à la section transversale.

3. Climatiseur (100) selon la revendication 2, dans lequel dans la deuxième forme le couvercle de trou de ventilation (40) est compacté dans une direction perpendiculaire à la section transversale et parallèle à la première direction.

4. Climatiseur (100) selon l'une quelconque des revendications 1 à 3, dans lequel : il comprend un trou (H1, H2) de retour servant de trou (H1, H2) de ventilation ; le trou (H1, H2) de retour a dans une vue du dessus un aspect rectangulaire allongé de sorte que la direction longitudinale du trou (H1, H2) de retour soit parallèle à la direction de développement principale de l'aspect rectangulaire allongé ; la première direction est parallèle à la direction longitudinale du trou (H1, H2) de retour ; et la deuxième direction est perpendiculaire à la direction longitudinale du trou (H1, H2) de retour.

5. Climatiseur (100) selon l'une quelconque des revendications 2 à 4, dans lequel le couvercle de trou de ventilation (40) dans la première forme est supporté aux deux extrémités dans une direction perpendiculaire à la section transversale et parallèle à la première direction.

6. Climatiseur (100) selon l'une quelconque des revendications 1 à 5, dans lequel le couvercle de trou de ventilation (40) est stocké dans le boîtier (10) dans la deuxième forme.

7. Climatiseur (100) selon l'une quelconque des revendications 1 à 6, dans lequel
le trou (H1, H2) de ventilation est formé dans une face de fond du boîtier (10),
le boîtier (10) a une paroi circonférentielle (30) s'élevant à partir de la face de fond (111), la paroi circonférentielle (30) entourant une circonférence entière du trou (H1, H2) de ventilation,
un trou d'évacuation d'eau (D1, D2) est formé dans une face latérale du boîtier (10) et est positionné en dessous d'un bord supérieur de la paroi circonférentielle (30), et
le couvercle de trou de ventilation (40, 70) dans la première forme couvre le trou (H1, H2) de ventilation dans une orientation du couvercle de trou de ventilation (40, 70) de sorte qu'une partie du couvercle de trou de ventilation (40, 70) faisant face au trou (H1, H2) de ventilation s'incline vers le bas vers la face latérale (112).
